# EUROPÄISCHE PATENTSCHRIFT

(11) **EP 3 333 456 B1**
(45) Veröffentlichungstag und Bekanntmachung des Hinweises auf die Patenterteilung: **21.08.2019**
(21) Anmeldenummer: 16202864.1
(22) Anmeldetag: 08.12.2016
(51) Int. Cl.: F16H 25/14, F04B 9/04

(54) **KOLBENPUMPE, KURVENGETRIEBE FÜR DIE UMSETZUNG EINES VARIABLEN HUBS UND VERWENDUNG EINES KURVENGETRIEBES**
PISTON PUMP, CAM GEAR FOR CONVERTING A VARIABLE LIFT AND USE OF A CAM GEAR
POMPE À PISTON, TRANSMISSION À CAMES POUR LA CONVERSION D'UNE COURSE VARIABLE ET UTISATION D'UNE TRANSMISSION À CAMES

(43) Veröffentlichungstag der Anmeldung: 13.06.2018
(73) Patentinhaber: KNAUER Wissenschaftliche Geräte GmbH, 14163 Berlin (DE)
(72) Erfinder: Bleisch, Julian Emanuel, 14109 Berlin (DE)
(74) Vertreter: Hertin und Partner Rechts- und Patentanwälte PartG mbB

(56) Entgegenhaltungen:
- WO-A1-2006/057018
- DE-B3-102008 019 072
- DE-C- 527 074
- SU-A1- 1 657 751
- US-A- 2 249 951
- US-A- 3 073 246
- US-A1- 2009 092 511

## Beschreibung

Die Erfindung betrifft ein Kurvengetriebe zur Umsetzung einer Schwenkbewegung einer antriebsseitigen Welle in einer lineare Abtriebsbewegung, umfassend eine Kurvenscheibe anbringbar an der antriebsseitigen Welle, einen Gleiter, welcher in einer Linearführung zumindest abschnittsweise verschiebbar ist und eine Abtastrolle, welche die Umfangsfläche der Kurvenscheibe beaufschlagt, sodass eine Schwenkbewegung der Kurvenscheibe zu einer linearen Abtriebsbewegung des Gleiters in der Linearführung führt, wobei der Umfang der Kurvenscheibe zumindest abschnittsweise spiralförmig ausgestaltet ist und der Radius der Kurvenscheibe in dem spiralförmigen Abschnitt von einem Anfangsradius R₁ zu einem Endradius R₂ entlang einer Schwenkrichtung monoton ansteigt. Durch Wahl zweier Umkehrpunkte innerhalb des spiralförmigen Abschnittes kann die Einstellung eines variablen Hubs erfolgen. Die Erfindung betrifft weiterhin eine Kolbenpumpe mit einem derartigen Kurvengetriebe sowie Verfahren zur Verwendung des Kurvengetriebes und der Kolbenpumpe.

### STAND DER TECHNIK UND HINTERGRUND

Die gattungsgemäße DE527074 offenbart die Merkmale des Oberbegriffes der unabhängigen Ansprüche 1, 12 und 14. In der Flüssigkeitschromatographie werden Substanzen aufgrund der physikochemischen Wechselwirkungen zwischen mobiler und stationärer Phase getrennt. Dabei wird die zu trennende Substanz, zusammen mit einem Elutionsmittel, durch die stationäre Phase gepumpt. Zur Erzeugung des hierfür erforderlichen Flüssigkeitsstroms werden im Stand der Technik üblicherweise Kolbenpumpen eingesetzt. Die Reduktion der Partikelgrößen der stationären Phase auf 2,2 bis 1,7 µm führt zu einer Geschwindigkeits- und Effizienzsteigerung in der Ultra Hochleistungsflüssigkeitschromatographie (UHPLC). Die Reduktion der Analysezeit in Verbindung mit einem gesteigerten Arbeitsdruck stellen erhöhte Anforderung an Genauigkeit und Präzision der Hochleistungspumpen dar.

Kolbenpumpen bestehen zumeist aus einem Zylinder in welchem ein Kolben als Verdränger der Flüssigkeit linear bewegt wird. Um eine Kolbenpumpe mit Hilfe eines Drehmotors anzutreiben, ist es mithin notwendig eine Drehbewegung in eine lineare Bewegung zu übersetzen.

Zu diesem Zweck ist es bekannt Kurvengetriebe zu verwenden. Hierbei wird die zumeist gleichförmige Drehbewegung eines Motors auf eine Kurvenscheibe übersetzt. Die Drehung der Kurvenscheibe wird auf eine Abtastrolle übertragen, welche mit linear geführten Abtriebselementen oder Gleitern verbunden ist. In Abhängigkeit der Form des Randes der Kurvenscheibe wird die Drehbewegung der Kurvenscheibe in eine Linearbewegung des Gleiters und somit des Kolben übersetzt.

In der DE 10 2008 019 072 A1 wird ein Kurvengetriebe für den Antrieb einer Kolbenpumpe für die Hochleistungsflüssigkeitschromatographie offenbart. Bei dem Kurvengetriebe ist die Position und Geometrie der Kurvenscheibe in Relation zur Abtastrolle und der Krafteinleitungsachse auf einen linear geführten Gleiter derart gewählt, dass eine Querkraft den Gleiter stets auf eine definierte Führungsfläche drückt. Hierdurch kann eine Reduktion der Spielfreiheit des Gleiters gewährleistet werden. Nachteilig an dem Kurvengetriebe ist jedoch die aufwändige Konstruktion, welche aus einschränkenden Erfordernissen an die Anordnung und Geometrie der Komponenten resultiert. Weiterhin kann mit dem Kurvengetriebe nur ein festgelegter Hub umgesetzt werden, welcher sich bei einem kompletten Umlauf der Kurvenscheibe aus der Form des Randes ergibt.

Zwar ist es bekannt mit Hilfe von Kugelgewindetrieben einen variablen Hub auf einen linear geführten Gleiter zu generieren, welcher sich durch die Umdrehungszahl des Gewindes für die jeweilige Vor- und Rückwärtsbewegung ergibt. Kugelgewindetriebe sind jedoch in der Anschaffung kostenintensiver und erfordern eine hohe geometrische Genauigkeit der Konstruktion, in der sie verbaut werden. Dies betrifft sowohl die Aufnahme, Führung als auch Motoranbindung. Des Weiteren wird auf Grund der hohen Trägheit eines Kugelgewindetriebes ein größeres Drehmoment zur Beschleunigung benötigt.

### AUFGABE DER ERFINDUNG

Eine Aufgabe der Erfindung war es ein Verfahren und eine Vorrichtung bereitzustellen, welche die Nachteile des Standes der Technik beseitigen. Insbesondere war es eine Aufgabe der Erfindung ein Kurvengetriebe und eine Kolbenpumpe bereitzustellen, welche die Einstellung eines variablen Hubs bei einer gleichzeitigen möglichst spielfreien Führung des Gleiters ermöglichen. Weiterhin sollten sich das Kurvengetriebe und die Kolbenpumpe durch einen einfachen, robusten Aufbau und eine hohe Toleranz bezüglich Fertigungsschwankungen auszeichnen.

### ZUSAMMENFASSUNG DER ERFINDUNG

Die erfindungsgemäße Aufgabe wird durch die unabhängigen Ansprüche gelöst. Die abhängigen Ansprüche betreffen bevorzugte Ausführungsformen der Erfindung.

In einer bevorzugten Ausführungsform betrifft die Erfindung ein Kurvengetriebe zur Umsetzung einer Schwenkbewegung einer antriebsseitigen Welle in einer lineare Abtriebsbewegung, umfassend a) eine Kurvenscheibe anbringbar an der antriebsseitigen Welle b) einen Gleiter, welcher in einer Linearführung zumindest abschnittsweise verschiebbar ist und c) eine Abtastrolle, welche die Umfangsfläche der Kurvenscheibe beaufschlagt, sodass eine Schwenkbewegung der Kurvenscheibe zu einer linearen Abtriebsbewegung des Gleiters in der Linearführung führt, wobei der Umfang der Kurvenscheibe zumindest abschnittsweise spiralförmig ausgestaltet ist und der Radius der Kurvenscheibe in dem spiralförmigen Abschnitt von einem Anfangsradius R₁ zu einem Endradius R₂ entlang einer Schwenkrichtung monoton ansteigt.

Das Kurvengetriebe erlaubt gemäß dem gattungsgemäßen Oberbegriff die Umsetzung einer Rotationsbewegung in einen linearen Abtrieb. Zu diesem Zweck kann das Kurvengetriebe an der antriebsseitigen Welle befestigt werden, welche an einen Motor angeschlossen ist. Der Motor versetzt die antriebsseitige Welle in eine Drehung, sodass sich die daran befestigte Kurvenscheibe entsprechend der Drehung der Welle rotiert. Die Drehachse der Kurvenscheibe fällt bevorzugt mit der Antriebswelle zusammen. Die Rotationsbewegung der Kurvenscheibe wird von einer Abtastrolle abgenommen, welche zu diesem Zweck die Kurvenscheibe beaufschlagt. D.h. während der Drehung der Kurvenscheibe liegt diese bevorzugt in unmittelbarem Kontakt mit der Abtastrolle vor. Die Abtastrolle ist an dem vorderen Ende eines Gleiters gekoppelt, welcher sich in einer Linearführung axial bewegen kann. Die Drehachse der Kurvenscheibe ist hingegen bevorzugt ortsfest gegenüber der Linearführung. Gemäß der Form des Randes der drehenden Kurvenscheibe wird demensprechend der Gleiter innerhalb der Linearführung axial bewegt.

Im Sinne der Erfindung bezeichnet der Umfang der Kurvenscheibe die Form des Randes der Kurvenscheibe. Erfindungsgemäß ist der Umfang der Kurvenscheibe mindestens abschnittsweise spiralförmig geformt. Die spiralförmige Geometrie des Umfanges bezieht sich bevorzugt auf den radialen Abstand des Randes der Kurvenscheibe von der Drehachse der Kurvenscheibe. Mithin wird unter einem "spiralförmige Abschnitt" bevorzugt ein Abschnitt der Kurvenscheibe verstanden, welcher durch einen stetig monoton ansteigenden radialen Abstand des Randes der Kurvenscheibe von der Drehachse mit Erhöhung des Drehwinkels gekennzeichnet ist.

Besonders bevorzugt ist der Radius im spiralförmigen Abschnitt streng monoton steigend mit dem Drehwinkel in einer Drehrichtung vom Anfang des spiralförmigen Abschnittes zum Ende des spiralförmigen Abschnittes. In dem radialen Abschnitt verhält sich der Rand der Kurvenscheibe bevorzugt abschnittsweise wie eine Spirale, welche sich von der Drehachse in Richtung des Schwenkwinkels erhöht. Bevorzugt werden Spiralen in Form von Polarkoordinaten angegeben. Beispielsweise sind arithmetische Spiralen durch einen linearen Anstieg des Radius gekennzeichnet. Andere Spiralformen betreffen beispielsweise hyperbolischen Spiralen oder eine logarithmische Spiralen. Der Fachmann erkennt, dass das abschnittsweise Verhalten des Randes der Kurvenscheibe als Spirale sich auf das monoton stetige Anwachsen eines Radius bezieht und keine Spiralformen mit Schwenkwinkeln von über 360° meint.

Der Anfangsradius R₁ bezeichnet im Sinne der Erfindung bevorzugt den radialen Abstand des Randes der Kurvenscheibe von der Drehachse am Anfang des spiralförmigen Abschnitts. Der Anfangsradius R₁ kennzeichnet den kleinsten Radius im spiralförmigen Abschnitt. In dem Kurvengetriebe koinzidiert daher die Beaufschlagung der Abtastrolle am Anfang des spiralförmigen Abschnittes mit der maximalen Einfahrposition des Gleiters. Während der Schwenkbewegung der Kurvenscheibe wird die Abtastrolle entlang des spiralförmigen Abschnittes geführt. Aufgrund des stetig monoton ansteigenden Umfanges der Kurvenscheibe erfährt die Abtastrolle, und somit der Gleiter, eine stetig monotone axiale Ausfahrbewegung. Bei einer Schwenkbewegung der Kurvenscheibe bis zum Ende des spiralförmigen Abschnittes erreicht der Gleiter die maximale Ausfahrposition für das Kurvengetriebe. Diese Position entspricht einer Beaufschlagung der Kurvenscheibe am Endradius R₂. Der Endradius R₂ bezeichnet im Sinne der Erfindung bevorzugt den radialen Abstand des Randes der Kurvenscheibe von der Drehachse am Ende des spiralförmigen Abschnitts und entspricht dem größten Radius des spiralförmigen Abschnitts.

Im Sinne der Erfindung bezeichnet eine Schwenkbewegung der Kurvenscheibe bevorzugt eine Drehung oder Rotation der Kurvenscheibe zwischen zwei Umkehrpunkten, sodass der Gleiter zwischen zwei Totpunkten eine oszillierende Bewegung in der Linearführung vollzieht. Durch eine Schwenkbewegung der Kurvenscheibe zwischen den Umkehrpunkten am Anfang des spiralförmigen Abschnittes (R₁) und am Ende des spiralförmigen Abschnittes (R₂) kann ein maximaler Hub der Differenz von R1 und R2 generiert werden. Im Sinne der Erfindung bezeichnet der Hub die Distanz zwischen den Totpunkten des Gleiters, d.h. den Positionen, in welcher der Gleiter von einer axialen Ausfahrbewegung in eine axiale Einfahrbewegung bzw. in umgekehrter Richtung wechselt. Weiterhin weiß der Fachmann, dass bei einer Ausgestaltung der Kurvenscheibe mit einem spiralförmigen Abschnitt, in welchem der Radius der Kurvenscheibe von R₁ auf R₂ ansteigt, aufgrund der Kontinuität des Randes der Kurvenscheibe der Radius des Umfanges in einem nicht spiralförmigen Abschnitt von R₂ auf R₁ abfällt. Die Kurvenscheibe beaufschlagt die Abtastrolle während der Schwenkbewegung bevorzugt ausschließlich im spiralförmigen Abschnitt und nicht in dem nicht spiralförmigen Abschnitt.

Während die Kurvengetriebe des Standes der Technik stets nur für einen festgelegten Hub konzipiert sind, welcher der Differenz zwischen dem maximalen und minimalen Radius der Drehbewegung entspricht, erlaubt das erfindungsgemäße Kurvengetriebe eine variable Einstellung des Hubs. Aufgrund des stetig monotonen radialen Anstieges in dem spiralförmigen Abschnitt können beliebige Umkehrpunkte der Schwenkbewegung zwischen dem Anfang (R₁) und dem Ende (R₂) des spiralförmigen Abschnitts gewählt werden. Beispielsweise können jeweils Umkehrpositionen mit radialen Abständen R₃ und R₄, wobei R₁<R₃<R₄<R₂ gewählt werden, sodass der Gleiter eine axiale Bewegung mit einem Hub entsprechend der Differenz aus R₄ und R₃ vollzieht. Zu diesem Zweck muss lediglich die Schwenkbewegung, beispielsweise mit Hilfe eines elektronisch steuerbaren Motors, derart eingestellt werden, dass eine Schwenkbewegung zwischen den Positionen vollzogen wird, welche jeweils einer Beaufschlagung der Abtastrolle an der Kurvenscheibe mit R₃ und R₄ entsprechen.

Mit Hilfe des erfindungsgemäßen schwenkbaren Kurvenantriebs ist es somit auf besonders einfache Weise möglich variabel einen gewünschten Hub einzustellen, um beispielsweise eine Kolbenpumpe mit diesem zu betreiben. Mithin ist es möglich mit einem einzigen Kurvengetriebe verschiedene Hübe des Gleiters zu realisieren. Dies kann besonders vorteilhaft in der Hochleistungsflüssigkeitschromatographie eingesetzt werden, um die Leistung der Kolbenpumpe für die zu trennenden Substanzen und Trennsäulen zu optimieren.

Für eine HPLC-Pumpe sind die Zyklenzeit und der Hub wichtige Parameter, die die Regelung und die Performance der Pumpe entscheidend beeinflussen. Pumpen mit fixem Hub werden für einen Arbeitspunkt optimiert und daraus determiniert sich für einen vorgegebenen Fluss die Zyklenzeit. Bei großen Abweichungen vom Arbeitspunkt, d.h. sehr kleinen oder sehr großen Flüssen ergeben sich große Zyklenzeiten oder hohe Frequenzen, was die Regelung erschwert oder den Materialverschleiß erhöht. Eine Kolbenpumpe mit variablem Hub erlaubt die unabhängige Regelung von Zyklenzeit und Fluss und bietet daher vor allem über große Flussbereiche eine optimale Performance.

Neben der Hochflüssigkeitschromatographie kann ein Kurvengetriebe mit variablem Hub auch eine vorteilhafte Verwendung in anderen Bereichen finden, wie beispielsweise zum Betreiben von Hubkolben-Verbrennungsmotoren mit variabler Verdichtung.

In einer bevorzugten Ausführungsform der Erfindung ist das Kurvengetriebe dadurch gekennzeichnet, dass der Radius der Kurvenscheibe in dem spiralförmigen Abschnitt linear mit dem Schwenkwinkel ansteigt. In dieser bevorzugten Ausführungsform verhält sich der Umfang der Kurvenscheibe mithin abschnittsweise wie eine arithmetische Spirale, welche entsteht, wenn bei einer Drehbewegung der Radius proportional zum Drehwinkel wächst. In Polarkoordinaten kann der Umfang der Kurvenscheibe somit bevorzugt als R(φ) = a * φ+R₁ ausgedrückt werden. Hierbei bezeichnet φ die Winkelkoordinate des Umfanges, wobei ein φ₀=0 dem Anfang des spiralförmigen Abschnittes entspricht (R₁ = R(φ₀)). Der Parameter a entspricht einem linearen Anstieg und es gilt bevorzugt a = (R₂ - R₁) / φₘₐₓ, wobei φₘₐₓ bevorzugt der Winkelkoordinate des Endes des spiralförmigen Abschnittes entspricht. φₘₐₓ ist somit gleich dem maximalen Schwenkwinkel, in welchem die Kurvenscheibe innerhalb des spiralförmigen Abschnitts von einer Beaufschlagung der Abtastrolle mit R₁ auf R₂ rotiert werden kann. Es gilt dementsprechend R(φₘₐₓ)= R₂.

Durch den linearen Anstieg der Kurvenscheibe in dem spiralförmigen Abschnitt kann eine besonders günstige kinematische Übertragungsfunktion der Schwenkbewegung einer Antriebswelle auf den linearen Abtrieb des Gleiters umgesetzt werden. So wird in der bevorzugten Ausführungsform eine gleichförmige Winkelgeschwindigkeit der Kurvenscheibe bzw. Antriebswelle in eine gleichförmige lineare axiale Bewegung des Gleiters übersetzt. Dies erlaubt eine einfachere Regelung des Antriebsmotors. Weiterhin können hierdurch auch nicht konstante Geschwindigkeit des Gleiters auf einfache Weise mit Hilfe eines Antriebs angesteuert werden.

Ein besonderer Vorteil dieser Ausführungsform ist es jedoch, dass durch einen linearen Anstieg des Radius eine gleichmäßige Dynamik von Querkräften des Gleiters innerhalb der Linearführung gewährleistet werden kann. So kann in dieser Ausführungsform unter einer entsprechenden Positionierung der Kurvenscheibe gegenüber der Abtastrolle bzw. Zentralachse des Gleiters sichergestellt werden, dass eine Querkraft auf einen bevorzugten Bereich der Linearführung wirkt. So kann es beispielsweise bevorzugt sein, die Positionierung der Komponenten derart zu wählen, dass eine Beaufschlagung der Kurvenscheibe an der Abtastrolle am Anfang des spiralförmigen Abschnittes zu einer Querkraft führt, welche den Gleiter mittig auf die Linearführung nach unten drückt. Vorteilhafterweise wird durch den linearen Anstieg gewährleistet, dass sich diese Querkraft während der Schwenkbewegung über den spiralförmigen Abschnitt nicht oder nur geringfügig ändert. Die bevorzugte Ausführungsform erlaubt somit eine besonders stabile und spielfreie Führung eines Gleiters durch ein Kurvengetriebe, wobei der Hub des Gleiters variabel einstellbar ist.

In einer bevorzugten Ausführungsform der Erfindung ist das Kurvengetriebe dadurch gekennzeichnet, dass die Differenz von R₂ - R₁ zwischen 1,5 mm und 50 mm, bevorzugt zwischen 5 mm und 30 mm und besonders bevorzugt zwischen 10 mm und 20 mm beträgt. In dieser Ausführungsform lässt sich in Abhängigkeit des Schwenkwinkels ein Hub des Gleiters variabel bis nahezu maximal 50 mm einstellen. Die Parameterwerte sind besonders geeignet für den Betrieb von Kolbenpumpen in der Hochleistungsflüssigkeitschromatographie, bei welchen Hubs der Gleiter zwischen bevorzugt 1,5 mm und 50 mm eine Verwendung finden. Vorteilhafterweise kann die Differenz von R₂ - R₁ derart gewählt werden, dass ein variabler Hub über den gewünschten Parameterbereich einstellbar ist. Beispielsweise kann es bevorzugt sein, eine Kolbenpumpe mit einem variablen Hub zwischen 20 mm und 40 mm zu betreiben. Hierfür wäre eine Differenz von R₂ - R₁ von 40 mm besonders geeignet. Zwar kann eine Kurvenscheibe mit einer Differenz von R₂ - R₁ von 40 mm auch deutlich kleinere Hübe von z.B. 2 mm durch einen entsprechend kleineren Schwenkwinkel umsetzen. Die Ansteuerung und Kraftübertragung durch die Antriebswelle mit Hilfe eines Motors ist jedoch für einen gegebenen Hub effizienter je größer der Schwenkwinkel ist. Demzufolge ist es besonders bevorzugt eine Differenz von R₂ - R₁ zu wählen, welche dem maximal gewünschten Hub entspricht oder sich diesem annähert. Für Anwendungen in der Hochleistungsflüssigkeitschromatographie ist es besonders bevorzugt, eine Kolbenpumpe mit einem variablen Hub bis zu ungefähr 15 mm zu betreiben. In diesem Falle ist es bevorzugt eine Differenz von R₂ - R₁ von ungefähr 15 mm zu wählen. Im Sinne der Erfindung wird mit den Bezeichnungen "nahezu", "ungefähr", "ca." oder synonymen Begriffen bevorzugt eine Toleranzspanne von ± 10%, besonders bevorzugt von ± 5% verstanden.

In einer bevorzugten Ausführungsform betrifft die Erfindung ein Kurvengetriebe, wobei der spiralförmige Abschnitt der Kurvenscheibe sich über einen Öffnungswinkel zwischen 90° und 340°, bevorzugt zwischen 220° und 330° erstreckt. Im Sinne der Erfindung bezeichnet der Schwenkwinkel bevorzugt den Drehwinkel der Kurvenscheibe, wobei der maximale Schwenkwinkel für eine Kurvenscheibe bevorzugt dem Öffnungswinkel des spiralförmigen Abschnittes entspricht. D.h. liegt an einem Drehwinkel φ = 0 der Anfang des spiralförmigen Abschnittes vor, an welchem die Kurvenscheibe eine Radius R₁ aufweist, so bezeichnet der maximale Schwenkwinkel φₘₐₓ bevorzugt den Drehwinkel entlang des spiralförmigen Abschnittes, bei welchem der Radius der Kurvenscheibe auf R₂ angestiegen ist, also das Ende des spiralförmigen Abschnittes erreicht hat. Die bevorzugte Ausführungsform betrifft somit Kurvenscheiben mit einem maximalen Schwenkwinkel, d.h. einem Öffnungswinkel des spiralförmigen Abschnittes zwischen R1 und R2, von 90° bis 340°, bevorzugt 220° bis 330°. Je höher der maximale Schwenkwinkel ist, desto geringer fällt das Drehmoment an der Antriebsachse aus und desto gleichmäßiger und kontrollierter lässt sich ein variabler Hub innerhalb des spiralförmigen Abschnittes einstellen. Andererseits ist der maximale Schwenkwinkel durch den Durchmesser der Abtastrolle begrenzt. Bei einem Öffnungswinkel des linearen Bereiches von deutlich über 340° kommt es zu einem sehr kurzen nicht spiralförmigen Abschnitt, sodass der maximale und minimale Radius der Kurvenscheibe R1 und R2 geometrisch nahe beieinanderliegen. Aufgrund der Ausdehnung der Abtastrolle kann es bei einem beim Anfahren des Anfanges des spiralförmigen Abschnittes bei R1 daher zu einer Kollision mit dem Endbereich des spiralförmigen Abschnittes bei R2 kommen.

Die genannten Parameterbereiche und insbesondere ein Schwenkwinkel von größer als 220° zeichnen sich somit durch die Bereitstellung eines Kurvengetriebes über einen großen variablen Hub aus, welcher mit hoher Präzision gefahren werden kann.

In einer bevorzugten Ausführungsform betrifft die Erfindung weiterhin ein Kurvengetriebe, wobei der Radius der Kurvenscheibe in dem spiralförmigen Abschnitt linear mit dem Schwenkwinkel ansteigt und der lineare Anstieg zwischen 0,005 mm/° und 0,5 mm/°, bevorzugt zwischen 0,02 mm/° und 0,2 mm/° und ganz besonders zwischen 0,03 mm/°und 0,08 mm/° beträgt. Die Parameterwerte entsprechen bevorzugt den Werten für den Parameter a für eine Beschreibung des Anstieges des Randes der Kurvenscheibe in Abhängigkeit des Drehwinkels φ gemäß R(φ) = a * φ+R₁ Bevorzugt liegt im Sinne der Erfindung auch dann ein linearer Anstieg vor, wenn der lokale Anstieg dR(φ)/dφ ungefähr a ist, d.h. wenn bevorzugt dR(φ)/dφ über den Schwenkwinkel des linearen Abschnittes um nicht mehr als ± 10% von einer Konstante a abweicht. Diese Werte erlauben eine besonders günstige kinematische Übertragungsfunktion von der Kurvenscheibe auf den Gleiter, wobei im Schwenkbereich auftretende Querkräfte konstant gehalten werden. Weiterhin sind diese Parameter besonders vorteilhaft für den Einsatz des Kurvengetriebes in der Hochleistungsflüssigkeitschromatographie, wobei dies bevorzugt erfolgt in Kombination mit den bevorzugt genannten Differenzen von R₂ - R₁ in einem Bereich zwischen 1,5 mm und 50 mm, bevorzugt zwischen 5 mm und 30 mm und besonders bevorzugt zwischen 10 mm und 20 mm sowie den bevorzugt genannten Öffnungswinkeln des spiralförmigen Abschnittes von 90° - 330° und besonders bevorzugt 220° - 360 °.

In einer bevorzugten Ausführungsform der Erfindung ist das Kurvengetriebe dadurch gekennzeichnet, dass die Auflagefläche der Linearführung zur Aufnahme des Gleiters und die dazu gegenförmig passende Gleitfläche des Gleiters im Querschnitt eine auf die Zentralachse ausgerichtete Verjüngung aufweisen. Es ist bevorzugt, dass die Auflagefläche und die Gleitfläche bei Führung des Gleiters in der Linearführung einen Vollkontakt ohne Zwischenräume aufweisen. Im Sinne der Erfindung bezeichnet die Zentralachse bevorzugt jene Achse, in welcher der Gleiter eine lineare, axiale Bewegung innerhalb der Linearführung ausführt. Bei der Verwendung des Kurvengetriebes zum Antrieb einer Kolbenpumpe entspricht die Zentralachse bevorzugt der Achse, in welcher der Kolben aufgrund der Kopplung an den Gleiter eine Linearbewegung vollzieht. Die Zentralachse ist somit bevorzugt die Krafteinleitungsachse für den Gleiter als Abtriebselement. Die im Querschnitt auf die Zentralachse ausgerichtete Verjüngung der Linearführung meint bevorzugt eine Verjüngung mit einer Symmetrieebene im Querschnitt, welche mit der Zentralachse zusammenfällt, sodass die Verjüngung einer seitlichen Bewegung des Gleiters entgegenwirkt. Die Ausrichtung der Verjüngung auf die Zentralachse meint somit bevorzugt eine seitliche bzw. horizontale Ausrichtung der Verjüngung. Es ist besonders bevorzugt, dass die Verjüngung der Auflagefläche der Linearführung nach unten erfolgt. Im Sinne der Erfindung bezeichnet unten, oben bzw. vertikal bevorzugt die Richtungen im Querschnitt des Kurvenantriebes bezüglich derer der Gleiter eine Querkraft erfährt. Dies kann zum Beispiel durch einen Symmetriebruch in der Anordnung der Positionierung der Kurvenscheibe zur Abtastrolle erfolgen, wobei die Drehachse der Kurvenscheibe gegenüber der Drehachse der Abtastrolle entlang der vertikalen Richtung versetzt ist.

Es kann auch bevorzugt sein, dass oben, unten bzw. vertikal in Bezug auf die Schwerkraft definiert sind, wobei der Gleiter aufgrund seines Eigengewichtes eine Querkraft zur Auflagefläche hin erfährt. Besonders bevorzugt wird mit unten jene Richtung bezeichnet, zu derer der Gleiter während der Bewegung in der Linearführung die stärkste Querkraft erfährt. Es ist daher besonders bevorzugt, dass die Auflagefläche der Linearführung zur Aufnahme des Gleiters unten vorliegt.

Seitliche bzw. horizontale Bewegungen betreffen jeweils die orthogonale Richtung zu oben und unten (vertikal), wobei eine Bewegung des Gleiters nach vorne bzw. hinten der Einfahr- bzw. Ausfahrrichtung des Gleiters entsprechen und auch als axiale Richtung bezeichnet wird. Durch die bevorzugte Verjüngung der Auflagefläche der Linearführung wird der Gleiter besonders stabil in der Linearführung geführt. Hierbei ist es besonders bevorzugt die Krafteinleitung in den Gleiter durch die Kurvenscheibe derart zu wählen, dass auf den Gleiter eine verstärkte Querkraft hin zu der Verjüngung ausgeübt wird. Dadurch wird der Gleiter während der axialen Bewegung in die Verjüngung gedrückt und hat somit ein besonders geringes seitliches Spiel. Es kann aber auch bevorzugt sein, eine symmetrische Anordnung zu wählen, wobei beispielsweise der Gleiter aufgrund seiner eigenen Schwerkraft in die Kraft hin zur Verjüngung erfährt und durch diese stabilisiert wird.

Die bevorzugte Ausführungsform einer verjüngten Auflagefläche mit entsprechend gegenförmig angepasstem Gleiter erlaubt eine Bewegung des Gleiters in der Linearführung mit besonders wenig Spiel. Hierdurch können Störungen und Verschleiß reduziert werden.

Vorteilhafterweise erlaubt zudem eine Führung des Gleiters auf einer einzigen Auflagefläche unter Verwendung einer Verjüngung eine ausgezeichnete Stabilität. Eine Begrenzung des Gleiters in der Linearführung durch andere Führungsflächen, wie beispielsweise Führungsflächen oberhalb oder seitlich von dem Gleiter, ist bevorzugt nicht notwendig. Hierdurch kann die Reibungsfläche des Gleiters mit der Linearführung deutlich reduziert werden. Außerdem stellt die bevorzugte Ausführungsform eine besonders einfache und kostengünstige Bauweise eines spielfreien Kurvenantriebes dar, welche dazu noch die Einstellung eines variablen Hubs erlaubt.

In einer bevorzugten Ausführungsform der Erfindung ist das Kurvengetriebe dadurch gekennzeichnet, dass die Auflagefläche der Linearführung zur Aufnahme des Gleiters und die dazu gegenförmig passende Gleitfläche des Gleiters im Querschnitt v-förmig sind mit einem Winkel von bevorzugt zwischen 30° und 170°, besonders bevorzugt zwischen 80° und 130°. V-förmig meint im Sinne der Erfindung bevorzugt eine Verjüngung mit zwei Flächen, welche wie der lateinische Buchstabe V aufeinander zu laufen und in einem Verjüngungspunkt unter einem Winkel zusammentreffen. Durch den Winkel der v-förmigen Auflageflächen lässt sich vorteilhafterweise das seitliche Spiel des Gleiters in der Linearführung beeinflussen, wobei die genannten Bereiche optimierte und dementsprechend bevorzugte Lösungen darstellen. Es wurde erkannt, dass bei einem zu spitzen Winkel beispielsweise von 10° oder niedriger zu einer erhöhten Druckausübung auf die seitlichen Flächen sowohl der v-förmigen Auflagefläche, als der dazu passend ausgestaltenden Gleitfläche kommen kann, wodurch die Reibung und der Verschleiß erhöht wird. Bei einem zu großen Winkel von beispielsweise 175° kann die flache Ausgestaltung der v-förmigen Fläche dazu führen, dass das seitliche Spiel des Gleiters in der Linearführung erhöht wird. Beziehungsweise wäre eine deutlich erhöhte Querkraft auf die Linearführung nötig, um den Gleiter weiterhin seitlich spielfrei zu führen.

Die v-förmige Auflagefläche, insbesondere für die genannten Parameter, resultiert in einer besonders stabilen Führung. Insbesondere können hierdurch Toleranzen zum Beispiel durch eine seitlich asymmetrische Einleitung der Kräfte wirksam ausgeglichen werden. Vorteilhafterweise stellt die v-förmige Auflagefläche dabei sicher, dass ein Spiel durch seitliche Bewegungen verhindert wird, da die v-förmige Gleitfläche auch seitlich in die Auflagefläche gepresst wird. In der gewählten Geometrie wird dabei überraschenderweise zudem der Verschleiß gesenkt.

In einer weiteren bevorzugten Ausführungsform betrifft die Erfindung ein Kurvengetriebe, wobei die Anordnung der Abtastrolle, der Kurvenscheibe und des Gleiters derart vorliegt, dass für den Bereich einer Schwenkbewegung während die Abtastrolle die Kurvenscheibe im spiralförmigen Abschnitt beaufschlagt, eine Radialkraft A von der Abtastrolle auf die Kurvenscheibe wirkt, welche mit der Axialkraft B, welche zu der Verschiebung des Gleiters führt, einen derartigen Winkel bildet, dass eine Querkraft C den Gleiter im Bereich der Gleitfläche vertikal nach unten in die Auflagefläche der Linearführung drückt. Der Fachmann weiß oder kann durch Versuche und Simulation in Erfahrung bringen welche geometrischen Anordnungen diese Kraftbedingung erfüllen. Beispielsweise kann es bevorzugt sein, dass die Drehachse der Kurvenscheibe mit der Zentralachse, d.h. der Krafteinleitungsachse für die Axialkraft B, zusammenfällt, wohingegen die Drehachse der Abtastrolle um einen Abstand D₁ nach oben versetzt ist. Hierdurch kann vorteilhafterweise gewährleistet werden, dass die Querkraft C auf den Gleiter einen vertikal nach unten gerichteten Druck ausübt, welcher diesen in der Linearführung stabilisiert. Ebenso ist es jedoch zum Beispiel auch möglich die Drehachse der Kurvenscheibe gegenüber der Zentralachse bzw. Krafteinleitungsachse vertikal um einen Abstand D₂ nach oben zu verschieben und die Drehachse der Abtastrolle um einen weiteren Abstand D₃ gegenüber der Drehachse der Kurvenscheibe zu versetzen. Auch durch einen derartigen doppelten Versatz ist es vorteilhafterweise möglich eine Querkraft C zu gewährleisten, welche den Gleiter vorzugsweise mittig auf die Auflagefläche der Linearführung nach unten drückt.

Die Änderung der Querkraft C ist darüber hinaus bevorzugt durch die Steigung des Radius der Kurvenscheibe im spiralförmigen Abschnitt einstellbar. Hierbei ist es besonders bevorzugt einen linearen Anstieg des Radius mit dem Schwenkwinkel zu wählen. In dieser Ausführungsform kann eine besonders stabil positionierte Querkraft C erreicht werden, welche sich insbesondere während der Schwenkbewegung der Kurvenscheibe zwischen den Umkehrpunkten nicht oder nur kaum bewegt. Der Fachmann erkennt jedoch, welche anderen Formen des spiralförmigen Abschnittes besonders gut geeignet sind, um während der Schwenkbewegung innerhalb des spiralförmigen Abschnittes zu erreichen, dass die Querkraft C stets vertikal nach unten den Gleiter in die Auflagefläche presst.

Durch die bevorzugte Ausführungsform lässt sich besonders zuverlässig ein Kippen des Gleiters verhindern, welches dadurch auftreten kann, dass die Querkraft C deutlich außerhalb der Gleitfläche ein Drehmoment auf den Gleiter bewirkt. Auch kann durch diese Ausführungsform ein Ausheben oder andere kurzzeitige mechanische Störungen im Bewegungsfluss des Gleiters wirksam vermieden werden. Somit wird durch diese bevorzugte Ausführungsform auf besonders effektive Weise ein sicherer und kontinuierlicher Betrieb des Kurvengetriebes und eine vertikale Spielfreiheit gewährleistet.

Im Sinne der Erfindung meint eine spielfreie oder spielreduzierte Führung bevorzugt, dass auch bei einer geringen asymmetrischen Krafteinleitung auf den Gleiter dieser sich nicht oder nur kaum aus der geführten Position bewegt. Bevorzugt bezieht sich die Spielfreiheit auf eine seitliche und/oder vertikale Bewegung des Gleiters. So könnte beispielsweise eine vertikale Verschiebung der Axialkraft B auf den Gleiter zu einer Kippbewegung führen. Durch eine Querkraft C, welche den Gleiter in die Linearführung drückt kann sichergestellt werden, dass entlang der vertikalen Richtung kein Spiel besteht. Ein Höhenspiel wird mithin vermieden.

Andererseits kann es beispielsweise durch eine seitliche Verschiebung der Axialkraft B auf den Gleiter zu einem Drehmoment des Gleiters um eine vertikale Achse kommen, welche zu einer seitlichen Bewegung des Gleiters führt. Dies wird bevorzugt als seitliches Spiel bezeichnet. Durch eine Verjüngung der Auflagefläche der Linearführung zur Aufnahme des Gleiters sowie der dazu gegenförmig passende Gleitfläche des Gleiters und der Querkraft C, welche den Gleiter in die Linearführung drückt, kann ein seitliches Spiel besonders sicher vermieden werden.

Die vorteilhafte Spielfreiheit führt zudem bevorzugt zu einer Reduktion des Verschleißes an den kontaktierenden Flächen der Linearführung und des Gleiters. Ein weiterer Vorteil ist es, dass die Spielfreiheit nicht durch Verschleiß negativ beeinflusst wird. Durch die stabilisierende Wirkung der Querkraft C kann insbesondere selbst beim Auftreten von Verschleiß weiterhin eine spielfreie Führung des Gleiters gewährleistet werden. Ein Verschleiß an der Gleitfläche könnte zum Beispiel zu einem Absenken des Gleiters führen. Die stabile Führung des Gleiters wäre davon nicht beeinträchtigt.

In einer bevorzugten Ausführungsform betrifft die Erfindung zudem ein Kurvengetriebe, wobei die Drehachse der Kurvenscheibe in der Ebene der Zentralachse des Gleiters liegt und die Drehachse der Abtastrolle um einen Abstand D₁ zu der Zentralachse des Gleiters vertikal nach oben versetzt ist. Durch diese Ausführungsform kann durch einfache konstruktive Mittel eine Querkraft C auf den Gleiter gewährleistet werden, welche vertikal nach unten zeigt. Bevorzugt ist der Abstand D₁ so zu wählen, dass die Position der Querkraft C möglichst mittig innerhalb der Auflagefläche liegt.

Beispielsweise kann es bevorzugt sein für eine Kurvenscheibe mit einem linearen Anstieg innerhalb des spiralförmigen Abschnittes zwischen 0,03 mm/° und 0,08 mm/° zur Realisierung eines maximalen Hubs zwischen 10 mm und 20 mm einen Achsversatz D₁ zwischen 0,2 mm und 1 mm zu wählen. Dies ist besonders vorteilhaft bei einer Größe der Abtastrolle zwischen 20 mm und 60 mm und einem Anfangsradius R1 der Kurvenscheibe zwischen 10 mm und 20 mm.

In einer weiteren bevorzugten Ausführungsform betrifft die Erfindung zudem ein Kurvengetriebe, wobei die Drehachse der Kurvenscheibe gegenüber der Zentralachse des Gleiters um einen Abstand D₂ vertikal nach oben versetzt ist und die Drehachse der Abtastrolle gegenüber der Drehachse der Kurvenscheibe um einen Abstand D₃ vertikal nach oben versetzt ist. Auch durch diesen doppelten Achsversatz der Kurvenscheibe sowie der Abtastrolle gegenüber der Zentralachse des Gleiters, d.h. bevorzugt der Krafteinleitungsachse, kann vorteilhafterweise eine stabilisierende Querkraft C erzielt werden, welche den Gleiter vertikal nach unten presst. Die Abstände D₂ und D₃ sind bevorzugt so wählen, dass die Querkraft C zentral innerhalb der Gleitfläche wirkt.

Beispielsweise kann es bevorzugt sein für eine Kurvenscheibe mit einem linearen Anstieg innerhalb des spiralförmigen Abschnittes zwischen 0,03 mm/° und 0,08 mm/° zur Realisierung eines maximalen Hubs zwischen 10 mm und 20 mm einen Achsversatz D₂ zwischen 0,5 mm und 1,5 mm und für D₃ zwischen 0,3 mm und 1,3 mm zu wählen.

Insbesondere in Verbindung mit einer Auflagefläche, welche die bevorzugte beschriebene Verjüngung aufweist, lassen sich durch eine vertikal nach unten gerichtete Querkraft C ausgezeichnete Ergebnisse in Bezug auf einen störungs- und spielfreien Betrieb des Kurvengetriebes erzielen.

In einer weiteren bevorzugten Ausführungsform betrifft die Erfindung eine Kolbenpumpe für die Hochleistungsflüssigkeitschromatographie umfassend ein erfindungsgemäßes Kurvengetriebe oder eine bevorzugte Ausführungsform davon sowie einen Motor zum Antrieb einer antriebsseitigen Welle, welcher mit der Kurvenscheibe verbunden ist, eine Steuerung des Motors, welche konfiguriert ist, sodass die Kurvenscheibe eine Schwenkbewegung zwischen zwei Umkehrpunkten ausführt und einen Kolben, welcher zentralaxial an dem Ende des Gleiters angebracht vorliegt, welches sich auf der von der Abtastrolle abgewandten Seite befindet. Bevorzugt bezeichnet die Steuerung eine Steuerelektronik, welche die Drehbewegung des Motors kontrolliert. Dem Fachmann sind verschiedene Steuerungen bekannt, um die Drehbewegung des Motors derart automatisiert einzustellen, dass dieser eine Schwenkbewegung der Kurvenscheibe zwischen zwei Umkehrpunkten ausführt. Bevorzugt ist die Steuerung derart konfiguriert, dass die Umkehrpunkte vom Nutzer der Kolbenpumpe eingestellt werden können. Entsprechend der erfindungsgemäßen Ausgestaltung der Kurvenscheibe werden die Umkehrpunkte bevorzugt im Bereich des spiralförmigen Abschnittes auswählbar sein und erlauben dadurch die Einstellung eines gewünschten Hubs der Kolbenpumpe über diesen Bereich. Hierbei kann es besonders bevorzugt sein eine Übersetzung zwischen der Drehbewegung des Motors und der Schwenkbewegung der Kurvenscheibe einzuführen, sodass der Motor einen höheren Drehwinkel als die Kurvenscheibe aufweist. Beispielsweise kann eine 10fache Übersetzung erfolgen, sodass für eine Schwenkbewegung der Kurvenscheibe von 270° der Motor 7,5 Umdrehungen, d.h. eine Drehbewegung von 2700°, entlang einer Richtung vollzieht.

Die Vorteile des erfindungsgemäßen Kurvengetriebes oder bevorzugten Ausführungsformen davon, wie die Einstellbarkeit eines variablen Hubs, lassen sich somit insbesondere für Kolbenpumpen in der Hochleistungsflüssigkeitschromatographie verwerten. Der Fachmann erkennt, dass bevorzugte Ausführungsformen und Vorteile, welche für das Kurvengetriebe offenbart wurden, sich gleichermaßen auf die Kolbenpumpe übertragen. So führt beispielsweise auch bei der Kolbenpumpe eine Verjüngung der Aufnahmefläche für den Gleiter, welcher durch eine Querkraft in diese gepresst wird, zu einer besonders stetigen Kolbenbewegung und reduziertem Spiel.

In einer bevorzugten Ausführungsform der Erfindung ist die Kolbenpumpe dadurch gekennzeichnet, dass der Motor parallel zur Drehachse der Kurvenscheibe hinter und nach oben oder nach unten versetzt zu dem Kurvengetriebe positioniert ist und bevorzugt einseitig bündig mit dem Kurvengetriebe abschließt. Durch das erfindungsgemäße Kurvengetriebe ist es auf besonders einfache Weise möglich den Motor derart aufzustellen. Durch diese Platzierung des Motors lassen sich, in besonders kompakter Bauweise, zwei Kurvengetriebe parallel betreiben, die in Teilen spiegelsymmetrisch aufgebaut sind, und bei denen ein Motor nach oben und ein Motor nach unten versetzt ist. Insbesondere im Bereich der Hochleistungsflüssigkeitschromatographie ist die dadurch erreichte einfachere Handhabung und Reduktion des benötigten Platzes von Vorteil.

In einer weiteren bevorzugten Ausführungsform betrifft die Erfindung die Verwendung eines Kurvengetriebes zum Antrieb einer Kolbenpumpe, wobei eine Schwenkbewegung der Kurvenscheibe während einer Beaufschlagung der Abtastrolle auf der Kurvenscheibe in dem spiralförmigen Abschnitt zwischen zwei Umkehrpunkten ausgeführt wird, sodass der Kolben linear zwischen zwei Totpunkten verschoben wird, wobei durch die Bestimmung der Umkehrpunkte ein vorgegebener Kolbenhub eingestellt wird, welcher der Differenz des Radius der Kurvenscheibe an dem ersten Umkehrpunkt zu dem Radius der Kurvenscheibe an dem zweiten Umkehrpunkt entspricht. Mithin umfasst die Erfindung bevorzugt zudem ein erfindungsgemäßes Verfahren zur Verwendung des Kurvengetriebes, wobei die Schwenkbewegung der Kurvenscheibe derart ausgeführt wird, dass diese einen gewünschten Hub des Gleiters bewirkt. Im Sinne der Erfindung bezeichnen die Begriffe Umkehrpunkte bevorzugt die Winkelpositionen, in welcher die Schwenkbewegung der Kurvenscheibe von einer Drehrichtung in die entgegengesetzte Drehrichtung geändert wird. Die Totpunkte des Gleiters korrelieren mit den Umkehrpunkten der Schwenkbewegung und entsprechen somit den Punkten, in welchen der Gleiter eine Richtungsänderung seiner linearen Bewegung erfährt.

Der Fachmann erkennt, dass bevorzugte Ausführungsformen und Vorteile, welche für das Kurvengetriebe offenbart wurden sich gleichermaßen auf die erfindungsgemäße Verwendung des Kurvengetriebes übertragen. Die Verfahrensschritte der erfindungsgemäßen Verwendung umfassen somit bevorzugt die Bereitstellung bevorzugter Ausführungsformen des Kurvengetriebes. Für diese wurde beispielsweise offenbart, dass eine Verjüngung der Aufnahmefläche für den Gleiter, welcher durch eine Querkraft in diese gepresst wird, zu einer besonders stetigen Bewegung des Gleiters führt. Der Fachmann erkennt, dass diese Ausführungsform auch bei der erfindungsgemäßen Verwendung zu einer Reduktion des Spiels und einer stabilen Gleitbewegung führt.

Im Folgenden soll die Erfindung an Hand von Beispielen näher erläutert werden, ohne auf diese beschränkt zu sein.

### Kurzbeschreibung der Abbildungen

- Fig. 1: Schematische Abbildung einer bevorzugten Ausführungsform des Kurvengetriebes, wobei der Gleiter sich in der maximalen Einfahrposition befindet
- Fig. 2: Schematische Abbildung der bevorzugten Ausführungsform des Kurvengetriebes gemäß Fig. 1, wobei der Gleiter sich auf einer halb ausgefahrenen Position befindet
- Fig. 3: Schematische Abbildung einer bevorzugten Ausführungsform des Kurvengetriebes gemäß Fig. 1, wobei der Gleiter sich in der maximalen Ausfahrposition befindet
- Fig. 4: Schematische Abbildung einer weiteren Ausführungsform des Kurvengetriebes, wobei die Drehachse der Kurvenscheibe und der Abtastrolle mit der Zentralachse zusammenfallen
- Fig. 5: Schematische Abbildung einer bevorzugten Ausführungsform des Kurvengetriebes mit einem doppelten Achsversatz zwischen der Zentralachse, der Drehachse der Kurvenscheibe und der Drehachse der Abtastrolle
- Fig. 6: Schematische Abbildung einer bevorzugten Ausführungsform des Kurvengetriebes, wobei die Steigung des Radius im spiralförmigen Abschnitt im Vergleich zu der Ausführungsform gemäß Fig. 1-3 erhöht ist
- Fig. 7: Schematische Abbildung einer bevorzugten Ausführungsform des Kurvengetriebes zur Illustration einer v-förmigen Auflagefläche der Linearführung

### Detaillierte Beschreibung der Abbildungen

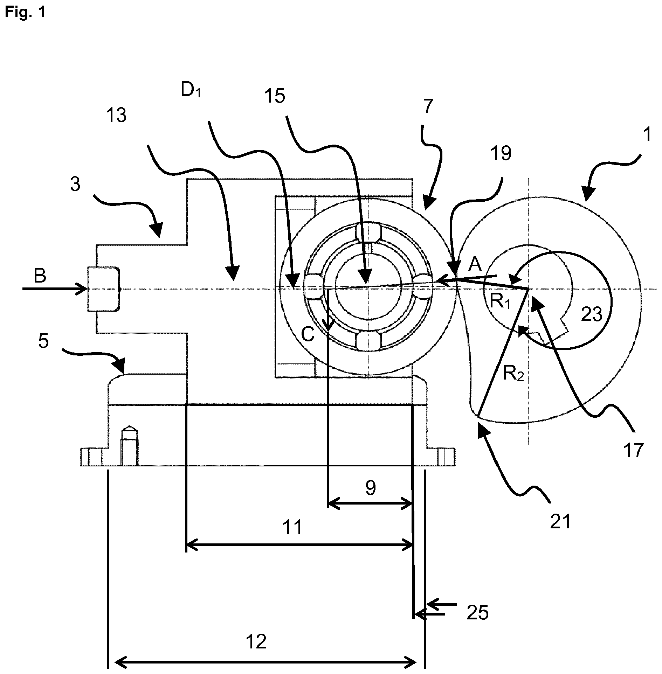

Die Fig. 1-3 zeigen eine bevorzugte Ausführungsform des Kurvengetriebes, wobei die Kurvenscheibe 1 in unterschiedlichen Positionen gezeigt wird, sodass die Bewegung des Gleiters 3 illustriert wird.

Die bevorzugte Ausführungsform des Kurvengetriebes weist eine Abtastrolle 7 auf, welche von der Kurvenscheibe 1 beaufschlagt wird. Die Abtastrolle 7 ist mit einem Gleiter 3 verbunden, welcher sich axial mit einer Gleitfläche 11 entlang der Auflagefläche 12 einer Linearführung 5 bewegen kann.

Die Drehachse der Kurvenscheibe 17 ist hingegen ortsfest gegenüber der Linearführung 5. Mithin wird der Gleiter 3 entsprechend der Form des Randes der Kurvenscheibe 1 durch eine Drehung der Kurvenscheibe 1 innerhalb der Linearführung 5 axial bewegt.

Der Umfang der Kurvenscheibe 1 weist einen spiralförmigen Abschnitt auf. Am Anfang des spiralförmigen Abschnitts 19 ist der Radius der Kurvenscheibe 1 R₁. In der bevorzugt gezeigten Ausführungsform steigt der Radius des Umfanges der Kurvenscheibe 1 linear mit dem Drehwinkel an, bis dieser am Ende des spiralförmigen Abschnittes 21 einen Radius R₂ erreicht. Zur Ausführung einer oszillierenden Bewegung des Gleiters 3 vollzieht die Kurvenscheibe 1 eine oszillierende Bewegung zwischen den in Fig. 1-3 dargestellten Positionen. Es ist bevorzugt, dass die Kurvenscheibe 1 zu diesem Zweck an eine antriebsseitige Welle angeschlossen ist, welche durch einen Motor eine oszillierende Drehbewegung (Schwenkbewegung) ausführt.

In Fig. 1 beaufschlagt die Kurvenscheibe 1 die Abtastrolle 7 an der Position, welche dem Anfang des spiralförmigen Abschnittes 19 entspricht. Da der Umfang in dieser Position den kleinsten Radius R₁ aufweist, befindet sich der Gleiter 3 in der maximalen Einfahrposition. Dies entspricht in der gezeigten Ausführungsform einer Fahrposition 25 des Gleiters von 2,8 mm. In der dargestellten Ausführungsform beträgt die Gesamtlänge der Gleitfläche 51 mm und der Auflagefläche der Linearführung 72 mm. Der Radius der Abtastrolle ist 20 mm, wobei R₁ 16 mm und R₂ 31mm betragen.

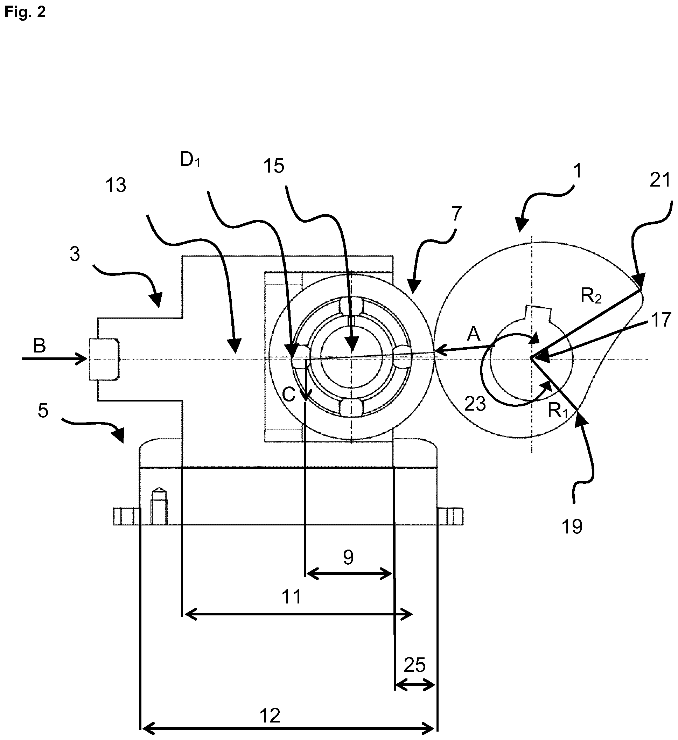

Fig. 2 zeigt die Positionierung des Gleiters 3 und der Kurvenscheibe 1, nach dem diese um einen Schwenkwinkel von 145° gedreht wurde. Dies entspricht dem halben maximalen Schwenkwinkel, welcher für die bevorzugte Ausführungsform innerhalb des spiralförmigen Abschnittes möglich ist. Der Öffnungswinkel 23 des spiralförmigen Abschnittes beträgt 290°. In der in Fig. 2 gezeigten Schwenkposition befindet sich der Gleiter 3 dementsprechend auf einer halb ausgefahrenen Fahrposition 25 von 10,45 mm.

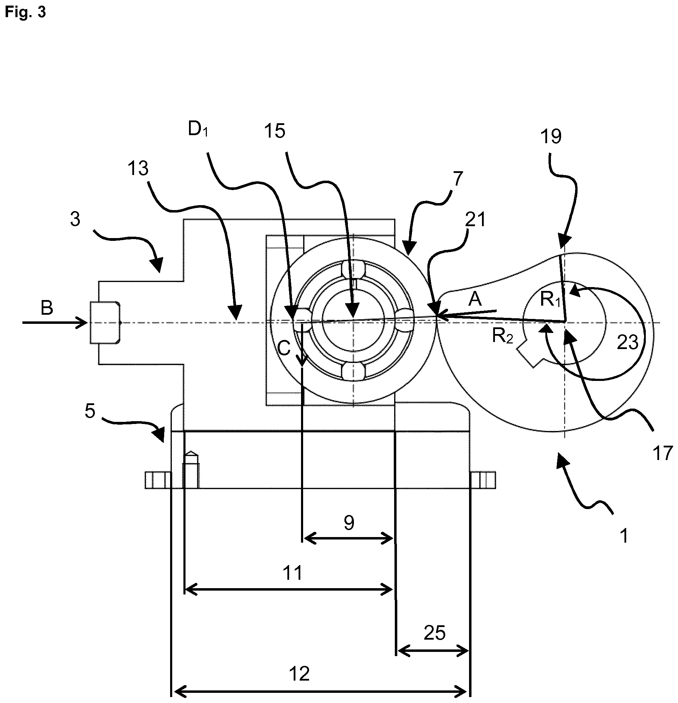

Fig. 3 zeigt den Kurvenantrieb nachdem die Kurvenscheibe 1 um einen weiteren Schwenkwinkel von 145° entlang des spiralförmigen Abschnittes gedreht wurde. In dieser Position beaufschlagt die Kurvenscheibe 1 die Abtastrolle 7 mit einem Radius R₂, welcher dem Ende des spiralförmigen Abschnittes 21 entspricht. Gegenüber der Fig. 1 wurde die Kurvenscheibe um den für die Ausführungsform maximalen Schwenkwinkel von 290° gedreht, welcher dem Öffnungswinkel 23 des spiralförmigen Abschnittes entspricht. Fig. 3 zeigt somit den Gleiter 3 in der maximalen Ausfahrposition. Diese entspricht in dem Beispiel einer Fahrposition 25 von 18,11 mm.

Um den Gleiter 3 in eine oszillierende lineare Bewegung zu versetzen, wird die Kurvenscheibe 1 zwischen den in Fig. 1 und 3 dargestellten Positionen der Umkehrpunkte der Schwenkbewegung rotiert. Die maximale Einfahrposition (Fig. 1) und die maximale Ausfahrposition (Fig. 3) entsprechen den Totpunkten der oszillierenden Bewegung des Gleiters 3, wobei der umgesetzte Hub der Differenz aus R₂ und R₁ entspricht. Im vorliegenden Beispiel wird ein Hub von 15,3 mm realisiert. Der lineare Anstieg zwischen R₁ und R₂ über den maximalen Schwenkwinkel von 290° beträgt 0,053 mm/°. Um eine Bewegung des Gleiters 3 mit einem abweichenden Hub zu erreichen, kann die Schwenkbewegung so gewählt werden, dass die Umkehrpunkte zwischen dem Anfang des spiralförmigen Abschnittes 19 und dem Ende des spiralförmigen Abschnittes 21 liegen.

In der bevorzugten Ausführungsform liegt die Drehachse der Kurvenscheibe 17 und die Zentralachse 13, d.h. die Krafteinleitungsachse des Gleiters 3, in einer Ebene vor, während die Drehachse der Abtastrolle 15 um einen Achsversatz D₁ vertikal nach oben versetzt ist. Wie in Fig. 1 gezeigt, bilden die Radialkraft A, welche von der Abtastrolle 7 auf die Kurvenscheibe 1 wirkt, mit der Axialkraft B, welche zur Verschiebung des Gleiters 3 führt und entlang der Krafteinleitungsachse 13 verläuft, einen derartigen Winkel, dass eine Querkraft C auf den Gleiter 3 wirkt, welche diesen vertikal nach unten in die Auflagefläche der Linearführung 12 presst. Für das vorliegende Beispiel beträgt der Achsversatz 0,6 mm und der Abstand 9 der Querkraft C vom Anfang der Gleitfläche 3 einem Wert von 19 mm. Wie in Fig. 1 zu sehen ist, wirkt die Querkraft C mittig auf den Gleiter 3, sodass dieser eine stabile Führung in der Linearführung 5 erfährt.

Der Fachmann weiß, dass durch eine Wahl des Achsversatz D₁ die Position 9 der Querkraft C innerhalb der Gleitfläche 11 verschiebbar ist. So wird eine Erhöhung des Achsversatz D₁ zu einer Verschiebung der Position 9 der Querkraft C hin zum hinteren Ende der Gleitfläche 11 führen. Das hintere Ende bezeichnet die von der Kurvenscheibe abgewandte Seite, während das vordere Ende das zur Kurvenscheibe zugewandte Ende bezeichnet. Beispielsweise würde für einen Achsversatz von D₁ = 1 mm, bei ansonsten gleichbleibenden Parametern, die Querkraft C bei einer Position von 28,1 mm liegen. Hingegen würde eine Erniedrigung des Achsversatz D₁ zu einer Verschiebung der Position 9 der Querkraft C hin zum vorderen Ende der Gleitfläche 11 führen. D.h. beispielsweise würde für einen Achsversatz von D₁ = 0,3 mm, bei ansonsten gleichbleibenden Parametern, die Querkraft C bei einer Position von 14 mm liegen.

In der bevorzugten Ausführungsform der Fig. 1-3 weist der spiralförmige Abschnitt einen linearen Anstieg des Radius von R₁ auf R₂ auf. Vorteilhafterweise bleibt dadurch die Position 9 der Querkraft C auch während der Schwenkbewegung nahezu konstant. Bei einer halb ausgefahrenen Position des Gleiters 3 gemäß Fig. 2 beträgt die Position 9 der Querkraft C in dem gezeigten Beispiel 20,8 mm. Bei einer voll ausgefahrenen Position des Gleiters 3 gemäß Fig. 3 ist die Position 9 der Querkraft C bei 22,7 mm.

Über den gesamten Bereich des spiralförmigen Abschnittes kann in der bevorzugten Ausführungsform somit eine besonders zentrale Positionierung der Querkraft C erreicht werden, welche eine besonders stabile Führung des Gleiters 3 in der Linearführung 5 erlaubt.

Es wird darauf hingewiesen, dass die genannten Parametergrößen für die Position 9 der Querkraft C sowie den Achsversatz D₁ lediglich beispielhaft bevorzugte Ausführungsformen der Erfindung illustrieren sollen. Eine Einschränkung erfolgt durch die Parameter nicht. Der Fachmann weiß, dass andere Parameter für den Achsversatz oder die Differenz aus R1 und R2 gewählt werden können, welche ebenfalls zu vorteilhaften Lösungen führen.

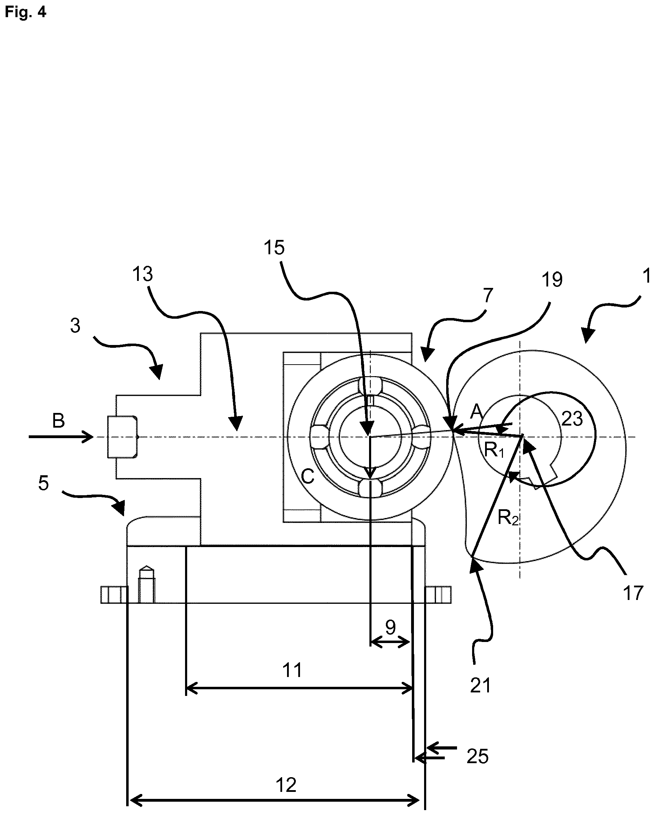

Fig. 4 zeigt eine weitere Ausführungsform des Kurvengetriebes, wobei die Drehachse der Kurvenscheibe 17 und die Drehachse der Abtastrolle 15 mit der Zentralachse 13 zusammenfallen. D.h. im Gegensatz zur Ausführungsform des Kurvengetriebes gemäß den Fig. 1-3 liegt in dieser Ausführungsform der Erfindung kein Achsversatz vor. Die Form des Randes der Kurvenscheibe 1 und insbesondere des spiralförmigen Abschnittes ist identisch zur Ausführungsform der Fig. 1-3. Aufgrund des linearen Anstiegs von 0,053 mm/° im spiralförmigen Abschnitt wird von der Abtastrolle 7 eine Radialkraft A auf die Kurvenscheibe 1 ausgeübt. Diese bildet mit der Axialkraft B einen Winkel, sodass der Gleiter 3 eine Querkraft C an der Position 9 vertikal nach unten erfährt. Der Gleiter 3 wird somit auch in dieser Ausführungsform ohne einen Achsversatz vorteilhafterweise in die Auflagefläche durch eine Querkraft C gedrückt. In dem Beispiel ist die Position der Querkraft C bei 10 mm. Im Gegensatz zur Ausführungsform gemäß den Fig. 1-3 ist die Querkraft C weniger zentral positioniert. Die Ausführungsform gemäß Fig. 4 ist erfindungsgemäß geeignet, weist jedoch gegenüber der Ausführungsform gemäß den Fig. 1-3 einen geringeren Grad an Toleranz gegenüber Abweichungen in der Fertigung auf. Aufgrund der asymmetrischen Positionierung der Querkraft C gegenüber der Mitte der Gleitfläche 11 ist diese Ausführungsform für die gezeigten Parameter stärker anfällig für Kippbewegungen des Gleiters 3.

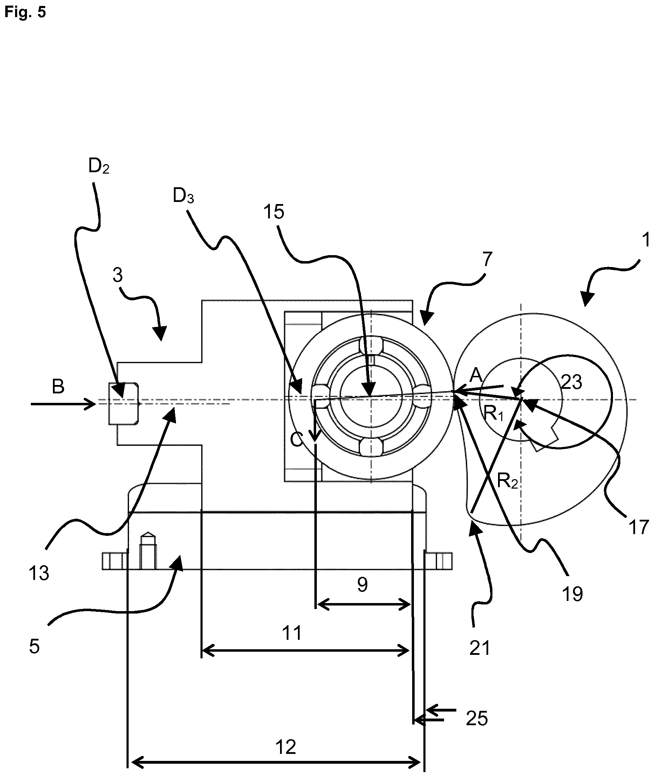

Fig. 5 zeigt eine schematische Abbildung einer weiteren bevorzugten Ausführungsform des Kurvengetriebes, wobei diese durch einen doppelten Achsversatz zwischen der Zentralachse 13, der Drehachse der Kurvenscheibe 17 und der Drehachse der Abtastrolle 15 gekennzeichnet ist. In der Ausführungsform ist die Drehachse der Kurvenscheibe 17 um den Achsversatz D₂ gegenüber der Zentralachse 13, d.h. der Krafteinleitungsachse für die Axialkraft B, vertikal nach oben verschoben. Zudem ist die Drehachse der Abtastrolle 15 um den Abstand D₃ vertikal nach oben gegenüber der Drehachse der Kurvenscheibe 17 versetzt. Die Form des Umfanges der Kurvenscheibe 1 und insbesondere des spiralförmigen Abschnittes ist identisch zur Ausführungsform gemäß den Fig. 1-3. Auch durch den doppelten Achsversatz kann vorteilhafterweise eine Querkraft C auf den Gleiter 3 erreicht werden, welche diesen vertikal und mittig in die Auflagefläche der Linearführung 12 presst. Für das gezeigte Beispiel beträgt D₂ 1 mm und D₃ 0,8 mm. Für diese Parameterwerte ergibt sich eine Position 9 der Querkraft C von 23,3 mm.

Auch ein doppelter Achsversatz kann somit vorteilhafterweise eine besonders mittig in der Gleitfläche 11 positionierte Querkraft C erreichen.

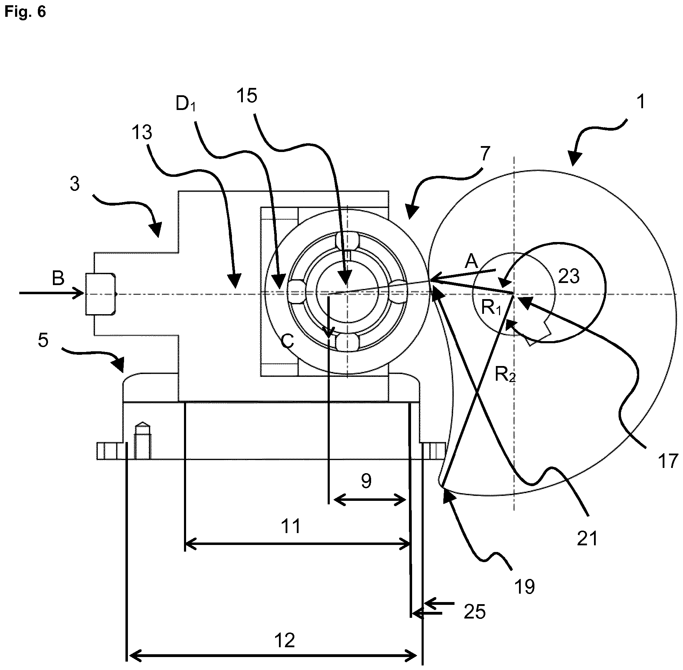

Fig. 6 zeigt eine schematische Abbildung einer bevorzugten Ausführungsform des Kurvengetriebes, wobei die Steigung des Radius im spiralförmigen Abschnitt im Vergleich zu der Ausführungsform gemäß Fig. 1-3 erhöht ist. In dem gezeigten Beispiel wird mit einem linearen Anstieg des Radius der Kurvenscheibe 1 im spiralförmigen Abschnitt von 0,1055 mm/° ein Hub von 30 mm realisiert. Analog zu den Fig. 1-3 befinden sich die Drehachse der Kurvenscheibe 17 und die Zentralachse 13 auf einer Linie, wobei die Drehachse der Abtastrolle 15 um einen Abstand D₁ vertikal nach oben versetzt ist. In dem gezeigten Beispiel beträgt D₁ 0,6 mm. Hierdurch ergibt sich eine Querkraft C, welche an einer Position 9 von 14,1 mm vorliegt. Aufgrund des erhöhten linearen Anstieges im Vergleich zur Ausführungsform der Fig. 1-3 hat sich die Querkraft C somit in eine Richtung hin zum vorderen Ende der Gleitfläche 11 bewegt. Während diese Ausführungsform für eine stabile Führung des Gleiters 3 geeignet ist, kann es bevorzugt sein den axialen Abstand D₁ für den erhöhten linearen Anstieg des Radius im spiralförmigen Abschnitt ebenfalls zu erhöhen. Dies führt zu einer Verschiebung der Position 9 der Querkraft C hin zum Ende der Gleitfläche 11. Beispielsweise würde bei einem Achsversatz D₁ von 1,5 mm und ansonsten unveränderten Parametern die Position 9 der Querkraft C 22,5 mm betragen.

Die Fig. 1 - 6 illustrieren eine Reihe von verschiedenen Ausführungsformen des erfindungsgemäßen Kurvengetriebes, wobei es besonders bevorzugt sein kann die Anordnung der Komponenten derart zu wählen, dass der Gleiter 3 eine Querkraft C erfährt, welche diesen in die Auflagefläche der Linearführung 5 presst.

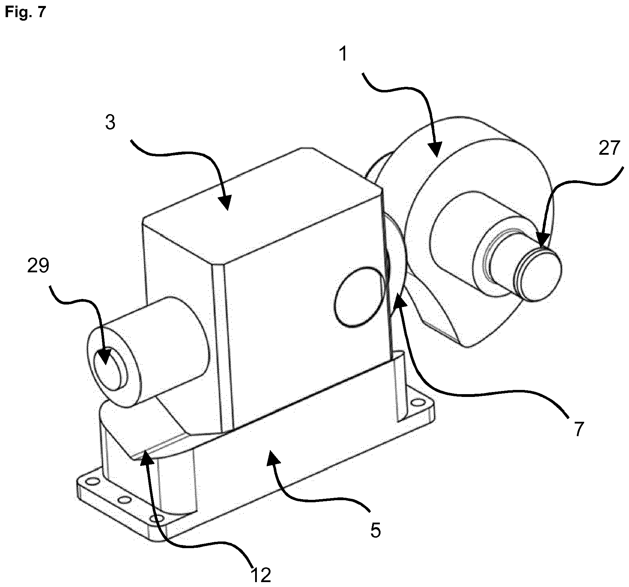

Die Fig. 7 zeigt eine dreidimensionale schematische Abbildung einer bevorzugten Ausführungsform des Kurvengetriebes, wodurch die vorteilhafte v-förmige Auflagefläche der Linearführung 12 illustriert wird. Die Kurvenscheibe 1 kann durch eine antriebsseitige Welle 27 in eine Schwenkbewegung versetzt werden, um eine Kolbenpumpe zu betreiben. Zu diesem Zweck liegt eine Abtastrolle 7 an einem vorderen Ende eines Gleiters 3 vor, welcher in einer Linearführung 5 eine Translation ausführen kann. Entsprechend der Form des Umfanges der Kurvenscheibe 1 wird durch die Schwenkbewegung eine oszillierende axiale Bewegung des Gleiters 3 bewirkt, welcher in Kontakt zu einem Kolben steht. Das Bezugszeichen 29 kennzeichnet die Anlagefläche für den Kolben. Wie beispielsweise in den Fig. 1-6 illustriert, ist es bevorzugt, dass die Anordnung der Komponenten des Kurvengetriebes derart erfolgt, dass auf den Gleiter 3 eine vertikale Kraft nach unten in die Auflagefläche 12 der Linearführung wirkt. Durch die v-förmige Ausgestaltung der Auflagefläche 12 der Linearführung sowie der dazu passend geformten Gleitfläche 11 ist eine besonders stabile Führung des Gleiters 3 möglich. So verhindert die v-förmige Auflagefläche 12 seitliche Bewegungen des Gleiters 3 und stellt eine nahezu spielfreie Führung des Gleiters 3 in der Linearführung 5 sicher. Auch können Toleranzen, zum Beispiel durch eine seitlich asymmetrische Einleitung der Kräfte aufgrund von Fertigungsfehlern, besonders wirksam ausgeglichen werden. Die besonders spielfreie Ausführungsform erlaubt neben einem ausgezeichnet stabilen und störungsfreien Bewegungsfluss des Gleiters 3 eine Reduktion des Verschleißes.

Es wird darauf hingewiesen, dass verschiedene Alternativen zu den beschriebenen Ausführungsformen der Erfindung verwendet werden können, um die Erfindung auszuführen und zu der erfindungsgemäßen Lösung zu gelangen. Das erfindungsgemäße Kurvengetriebe, die erfindungsgemäße Kolbenpumpe sowie deren Verwendung in den beschrieben Verfahren beschränken sich in ihren Ausführungen somit nicht auf die vorstehenden bevorzugten Ausführungsformen. Vielmehr ist eine Vielzahl von Ausgestaltungsvarianten denkbar, welche von der dargestellten Lösung abweichen können. Ziel der Ansprüche ist es, den Schutzumfang der Erfindung zu definieren. Der Schutzumfang der Ansprüche ist darauf gerichtet, das erfindungsgemäße Kurvengetriebe, die erfindungsgemäße Kolbenpumpe und bevorzugte Verfahren zu deren Verwendung sowie äquivalente Ausführungsformen von diesen abzudecken.

### BEZUGSZEICHENLISTE

- 1: Kurvenscheibe
- 3: Gleiter
- 5: Linearführung
- 7: Abtastrolle
- 9: Position der Querkraft C, d.h. Abstand der Querkraft C zum Anfang der Gleitfläche
- 11: Gleitfläche
- 12: Auflagefläche der Linearführung
- 13: Zentralachse (bzw. Krafteinleitungsachse)
- 15: Drehachse der Abtastrolle
- 17: Drehachse der Kurvenscheibe
- 19: Anfang des spiralförmigen Abschnittes
- 21: Ende des spiralförmigen Abschnittes
- 23: Öffnungswinkel des spiralförmigen Abschnittes
- 25: Fahrposition des Gleiters
- 27: Antriebsseitige Welle
- 29: Anlagefläche für einen Kolben
- R₁: Radius der Kurvenscheibe am Anfang des spiralförmigen Abschnitts
- R₂: Radius der Kurvenscheibe am Anfang des spiralförmigen Abschnitts
- A: Radialkraft
- B: Axialkraft
- C: Querkraft
- D₁: Achsversatz zwischen der Drehachse der Abtastrolle und der Drehachse der Kurvenscheibe bzw. Zentralachse
- D₂: Achsversatz zwischen der Zentralachse und der Drehachse der Kurvenscheibe
- D₃: Achsversatz zwischen der Drehachse der Kurvenscheibe und der Drehachse der Abtastrolle

## Patentansprüche

1. Kolbenpumpe für die Hochleistungsflüssigkeitschromatographie umfassend
ein Kurvengetriebe zur Umsetzung einer Schwenkbewegung einer antriebsseitigen Welle (27) in eine lineare Abtriebsbewegung, umfassend
a) eine Kurvenscheibe (1) anbringbar an der antriebsseitigen Welle (27)
b) einen Gleiter (3), welcher in einer Linearführung (5) zumindest abschnittsweise verschiebbar ist und
c) eine Abtastrolle (7), welche die Umfangsfläche der Kurvenscheibe (1) beaufschlagt, sodass eine Schwenkbewegung der Kurvenscheibe (1) zu einer linearen Abtriebsbewegung des Gleiters (3) in der Linearführung (5) führt, wobei der Umfang der Kurvenscheibe (1) zumindest abschnittsweise spiralförmig ausgestaltet ist und der Radius der Kurvenscheibe (1) in dem spiralförmigen Abschnitt (19, 21) von einem Anfangsradius R₁ zu einem Endradius R₂ entlang einer Schwenkrichtung monoton ansteigt,
einen Motor zum Antrieb der antriebsseitigen Welle (27), welche mit der Kurvenscheibe (1) verbunden ist,
eine Steuerung des Motors
sowie ein Kolben, welcher zentralaxial an dem Ende des Gleiters (3) angebracht vorliegt, welches sich auf der von der Abtastrolle (7) abgewandten Seite befindet **dadurch gekennzeichnet, dass**
die Steuerung des Motors konfiguriert ist, sodass die Kurvenscheibe (1) eine Schwenkbewegung zwischen zwei Umkehrpunkten ausführt.

2. Kolbenpumpe gemäß dem vorherigen Anspruch
**dadurch gekennzeichnet, dass**
die Differenz aus R₂ - R₁ zwischen 1,5 mm und 50 mm, bevorzugt zwischen 5 mm und 30 mm und besonders bevorzugt zwischen 10 mm und 20 mm beträgt.

3. Kolbenpumpe gemäß einem der vorherigen Ansprüche
**dadurch gekennzeichnet, dass**
der Radius der Kurvenscheibe (1) in dem spiralförmigen Abschnitt (19, 21) linear mit dem Schwenkwinkel ansteigt.

4. Kolbenpumpe gemäß einem der vorherigen Ansprüche
**dadurch gekennzeichnet, dass**
der spiralförmige Abschnitt (19, 21) der Kurvenscheibe (1) sich über einen Öffnungswinkel (23) zwischen 90° und 340° bevorzugt zwischen 220° und 330° erstreckt.

5. Kolbenpumpe gemäß einem der vorherigen Ansprüche
**dadurch gekennzeichnet, dass**
der Radius der Kurvenscheibe (1) in dem spiralförmigen Abschnitt (19, 21) linear mit dem Schwenkwinkel ansteigt und der lineare Anstieg zwischen 0,005 mm/° und 0,5 mm/°, bevorzugt zwischen 0,02 mm/° und 0,2 mm/° und ganz besonders zwischen 0,03 mm/°und 0,08 mm/° beträgt.

6. Kolbenpumpe gemäß einem der vorherigen Ansprüche
**dadurch gekennzeichnet, dass**
die Auflagefläche der Linearführung (12) zur Aufnahme des Gleiters (3) und die dazu gegenförmig passende Gleitfläche des Gleiters (11) im Querschnitt eine auf die Zentralachse (13) ausgerichtete Verjüngung aufweisen.

7. Kolbenpumpe gemäß einem der vorherigen Ansprüche
**dadurch gekennzeichnet, dass**
die Auflagefläche der Linearführung (12) zur Aufnahme des Gleiters (3) und die dazu gegenförmig passende Gleitfläche des Gleiters (11) im Querschnitt v-förmig sind mit einem Winkel von bevorzugt zwischen 30° und 170° besonders bevorzugt zwischen 80° und 130°.

8. Kolbenpumpe gemäß einem der vorherigen Ansprüche
**dadurch gekennzeichnet, dass**
eine Anordnung der Abtastrolle (7), der Kurvenscheibe (1) und des Gleiters (3) derart vorliegt, dass für den Bereich einer Schwenkbewegung während die Abtastrolle (7) die Kurvenscheibe (1) im spiralförmigen Abschnitt (19, 21) beaufschlagt, eine Radialkraft A von der Abtastrolle (7) auf die Kurvenscheibe (1) wirkt, welche mit der Axialkraft B, welche zu der Verschiebung des Gleiters (3) führt, einen derartigen Winkel bildet, dass eine Querkraft C den Gleiter (3) im Bereich der Gleitfläche (11) vertikal nach unten in die Auflagefläche der Linearführung (12) drückt.

9. Kolbenpumpe gemäß einem der vorherigen Ansprüche
**dadurch gekennzeichnet, dass**
die Drehachse der Kurvenscheibe (17) in der Ebene der Zentralachse (13) des Gleiters (3) liegt und die Drehachse der Abtastrolle (15) um einen Abstand D₁ zu der Zentralachse (13) des Gleiters (3) vertikal nach oben versetzt ist.

10. Kolbenpumpe gemäß einem der vorherigen Ansprüche
**dadurch gekennzeichnet, dass**
die Drehachse der Kurvenscheibe (17) gegenüber der Zentralachse (13) des Gleiters (3) um einen Abstand D₂ vertikal nach oben versetzt ist und die Drehachse der Abtastrolle (15) gegenüber der Drehachse der Kurvenscheibe (17) um einen Abstand D₃ vertikal nach oben versetzt ist.

11. Kolbenpumpe gemäß einem der vorherigen Ansprüche
**dadurch gekennzeichnet, dass**
der Motor parallel zu der Drehachse der Kurvenscheibe (17) hinter und nach oben oder unten versetzt zu dem Kurvengetriebe positioniert ist.

12. Kurvengetriebe zur Umsetzung einer Schwenkbewegung einer antriebsseitigen Welle (27) in eine lineare Abtriebsbewegung, umfassend
a) eine Kurvenscheibe (1) anbringbar an der antriebsseitigen Welle (27)
b) einen Gleiter (3), welcher in einer Linearführung (5) entlang einer Zentralachse zumindest abschnittsweise verschiebbar ist und
c) eine Abtastrolle (7), welche die Umfangsfläche der Kurvenscheibe (1) beaufschlagt, sodass eine Schwenkbewegung der Kurvenscheibe (1) zu einer linearen Abtriebsbewegung des Gleiters (3) in der Linearführung (5) führt, wobei der Umfang der Kurvenscheibe (1) zumindest abschnittsweise spiralförmig ausgestaltet ist und der Radius der Kurvenscheibe (1) in dem spiralförmigen Abschnitt (19, 21) von einem Anfangsradius R₁ zu einem Endradius R₂ entlang einer Schwenkrichtung monoton ansteigt,
**dadurchgekennzeichnet, dass**
die Auflagefläche der Linearführung (12) zur Aufnahme des Gleiters (3) und die dazu gegenförmig passende Gleitfläche des Gleiters (11) im Querschnitt eine auf die Zentralachse (13) ausgerichtete Verjüngung aufweisen.

13. Kurvengetriebe gemäß des vorherigen Anspruches
**dadurch gekennzeichnet, dass**
die Auflagefläche der Linearführung (12) zur Aufnahme des Gleiters (3) und die dazu gegenförmig passende Gleitfläche des Gleiters (11) im Querschnitt v-förmig sind mit einem Winkel von bevorzugt zwischen 30° und 170° besonders bevorzugt zwischen 80° und 130°.

14. Verwendung eines Kurvengetriebes zur Umsetzung einer Schwenkbewegung einer antriebsseitigen Welle (27) in einer lineare Abtriebsbewegung, umfassend
a) eine Kurvenscheibe (1) anbringbar an der antriebsseitigen Welle (27)
b) einen Gleiter (3), welcher in einer Linearführung (5) zumindest abschnittsweise verschiebbar ist und
c) eine Abtastrolle (7), welche die Umfangsfläche der Kurvenscheibe (1) beaufschlagt, sodass eine Schwenkbewegung der Kurvenscheibe (1) zu einer linearen Abtriebsbewegung des Gleiters (3) in der Linearführung (5) führt, wobei der Umfang der Kurvenscheibe (1) zumindest abschnittsweise spiralförmig ausgestaltet ist und der Radius der Kurvenscheibe (1) in dem spiralförmigen Abschnitt (19, 21) von einem Anfangsradius R₁ zu einem Endradius R₂ entlang einer Schwenkrichtung monoton ansteigt zum Antrieb einer Kolbenpumpe
**dadurch gekennzeichnet, dass**
eine Schwenkbewegung der Kurvenscheibe (1) während einer Beaufschlagung der Abtastrolle (7) auf der Kurvenscheibe (1) in dem spiralförmigen Abschnitt (19, 21) zwischen zwei Umkehrpunkten ausgeführt wird, sodass der Kolben linear zwischen zwei Totpunkten verschoben wird, wobei durch die Bestimmung der Umkehrpunkte ein vorgegebener Kolbenhub eingestellt wird, welcher der Differenz des Radius der Kurvenscheibe (1) an dem ersten Umkehrpunkt zu dem Radius der Kurvenscheibe (1) an dem zweiten Umkehrpunkt entspricht.

## Claims

1. A piston pump for high performance liquid chromatography comprising a cam mechanism for converting a swiveling movement of a drive-side shaft (27) into a linear output movement, comprising
a) a cam disk (1) that can attach to the drive-side shaft (27)
b) a slider (3) that can be shifted in a linear guide (5) at least in sections, and
c) a cam follower (7) which is applied against the circumferential surface of the cam disk (1), so that a swiveling movement of the cam disk (1) leads to a linear output movement of the slider (3) in the linear guide (5), wherein the circumference of the cam disk (1) is designed as spiral-shaped at least in sections, and the radius of the cam disk (1) increases monotonically in the spiral-shaped section (19, 21) from a start radius R₁ to an end radius R₂ along a swiveling direction,
a motor for driving a drive-side shaft (27) which is connected to the cam disk (1),
a control of the motor,
and a piston which is present attached central axially on the end of the slider (3), on the side facing away from the cam follower (7)
**characterized in that**
the control of the motor is configured so that the cam disk (1) performs a swiveling movement between two reversal points.

2. The piston pump according to the preceding claim,
**characterized in that**
the difference R₂ - R₁ is between 1.5 mm and 50 mm, preferably between 5 mm and 30 mm, and particularly preferably between 10 mm and 20 mm.

3. The piston pump according to either of the preceding claims,
**characterized in that**,
in the spiral-shaped section (19, 21), the radius of the cam disk (1) increases linearly with the swiveling angle.

4. The piston pump according to any one of the preceding claims,
**characterized in that**
the spiral-shaped section (19, 21) of the cam disk (1) extends over an opening angle (23) between 90° and 340°, preferably between 220° and 330°.

5. The piston pump according to any one of the preceding claims,
**characterized in that,**
in the spiral-shaped section (19, 21), the radius of the cam disk (1) increases linearly with the swiveling angle, and the linear increase is between 0.005 mm/°and 0.5 mm/°, preferably between 0.02 mm/° and 0.2 mm/°, and most particularly between 0.03 mm/° and 0.08 mm/°.

6. The piston pump according to any one of the preceding claims,
**characterized in that**
the contact surface of the linear guide (12) for receiving the slider (3) and the opposite-shaped matching sliding surface of the slider (11) comprise, in cross section, a narrowing directed towards the central axis (13).

7. The piston pump according to any one of the preceding claims,
**characterized in that**
the contact surface of the linear guide (12) for receiving the slider (3) and the opposite-shaped matching sliding surface of the slider (11) are v-shaped in cross section, with an angle of preferably between 30° and 170°, particularly preferably between 80° and 130°.

8. The piston pump according to any one of the preceding claims,
**characterized in that**
an arrangement of the cam follower (7), of the cam disk (1) and of the slider (3) is present such that, for the area of a swiveling movement, while the cam follower (7) is applied against the cam disk (1) in the spiral-shaped section (19, 21), a radial force A acts from the cam follower (7) onto the cam disk (1), forming an angle with the axial force B leading to the shifting of the slider (3), such that a transverse force C presses the slider (3) in the area of the sliding surface (11) vertically downward into the contact surface of the linear guide (12).

9. The piston pump according to any one of the preceding claims,
**characterized in that**
the rotation axis of the cam disk (17) lies in the plane of the central axis (13) of the slider (3), and the rotation axis of the cam follower (15) is offset vertically upward by a distance D₁ relative to the central axis (13) of the slider (3).

10. The piston pump according to any one of the preceding claims,
**characterized in that**
the rotation axis of the cam disk (17) is offset vertically upward by a distance D₂ relative to the central axis (13) of the slider (3), and the rotation axis of the cam follower (15) is offset vertically upward by a distance D₃ with respect to the rotation axis of the cam disk (17).

11. The piston pump according any one of the preceding claims,
**characterized in that**
the motor is positioned parallel to the rotation axis of the cam disk (17) to the rear and offset downward or upward relative to the cam mechanism.

12. A cam mechanism for converting a swiveling movement of a drive-side shaft (27) into a linear output movement, comprising
a) a cam disk (1) that can attach to the drive-side shaft (27)
b) a slider (3) that can be shifted in a linear guide (5) at least in sections, and
c) a cam follower (7) which is applied against the circumferential surface of the cam disk (1), so that a swiveling movement of the cam disk (1) leads to a linear output movement of the slider (3) in the linear guide (5), wherein the circumference of the cam disk (1) is designed as spiral-shaped at least in sections, and the radius of the cam disk (1) increases monotonically in the spiral-shaped section (19, 21) from a start radius R₁ to an end radius R₂ along a swiveling direction,
**characterized in that**
the contact surface of the linear guide (12) for receiving the slider (3) and the opposite-shaped matching sliding surface of the slider (11) comprise, in cross section, a narrowing directed towards the central axis (13).

13. A cam mechanism according to the previous claim,
**characterized in that**
the contact surface of the linear guide (12) for receiving the slider (3) and the opposite-shaped matching sliding surface of the slider (11) are v-shaped in cross section, with an angle of preferably between 30° and 170°, particularly preferably between 80° and 130°.

14. Use of a cam mechanism for converting a swiveling movement of a drive-side shaft (27) into a linear output movement, comprising
a) a cam disk (1) that can attach to the drive-side shaft (27)
b) a slider (3) that can be shifted in a linear guide (5) at least in sections, and
c) a cam follower (7) which is applied against the circumferential surface of the cam disk (1), so that a swiveling movement of the cam disk (1) leads to a linear output movement of the slider (3) in the linear guide (5), wherein the circumference of the cam disk (1) is designed as spiral-shaped at least in sections, and the radius of the cam disk (1) increases monotonically in the spiral-shaped section (19, 21) from a start radius R₁ to an end radius R₂ along a swiveling direction for driving a piston pump
**characterized in that,**
a swiveling movement of the cam disk (1) between two reversal points is carried out while the cam follower (7) is applied against the cam disk (1) in the spiral-shaped section (19, 21), so that the piston is shifted linearly between two dead points, wherein, by determination of the reversal points, a predetermined piston stroke is set, which corresponds to the difference between the radius of the cam disk (1) at the first reversal point and the radius of the cam disk (1) at the second reversal point.

## Revendications

1. Pompe à piston pour la chromatographie en phase liquide à puissance de cuisson comprenant
une transmission à came pour transformer un mouvement de pivotement d'un arbre côté entraînement (27) en un mouvement de sortie linéaire, comprenant
a) un disque à came (1) pouvant être fixé à l'arbre côté entraînement (27)
b) un coulisseau (3) qui peut être déplacé au moins par sections dans un guidage linéaire (5), et
c) un rouleau de balayage (7) qui agit sur la surface circonférentielle du disque à came (1) de telle sorte qu'un mouvement de pivotement du disque à came (1) entraîne un mouvement de sortie linéaire du coulisseau (3) dans le guidage linéaire (5), où
la circonférence du disque à came (1) est conçue pour être en spirale au moins par sections, et le rayon du disque à came (1) dans la section en spirale (19, 21) augmente de manière monotone d'un rayon initial R₁ à un rayon final R₂ dans une direction pivotante,
un moteur pour l'entraînement de l'arbre côté entraînement (27) qui est relié au disque à cames (1),
une commande moteur
ainsi qu'un piston qui est fixé de manière centrée à l'extrémité du coulisseau (3) qui se trouve du côté opposé au rouleau de balayage (7)
**caractérisée en ce que**
la commande du moteur est configurée de telle sorte que le disque de came (1) effectue un mouvement de pivotement entre deux points d'inversion.

2. Pompe à piston selon la revendication précédente
**caractérisée en ce que**
la différence entre R₂ - R₁ est comprise entre 1,5 mm et 50 mm, de préférence entre 5 mm et 30 mm et en particulier entre 10 mm et 20 mm.

3. Pompe à piston selon l'une des revendications précédentes
**caractérisée en ce que**
le rayon du disque à came (1) dans la section en spirale (19, 21) augmente linéairement avec l'angle de pivotement.

4. Pompe à piston selon l'une des revendications précédentes
**caractérisée en ce que**
la section en spirale (19, 21) du disque à came (1) s'étend sur un angle d'ouverture (23) compris entre 90° et 340°, de préférence entre 220° et 330°.

5. Pompe à piston selon l'une des revendications précédentes
**caractérisée en ce que**
le rayon du disque à came (1) dans la section en spirale (19, 21) augmente linéairement avec l'angle de pivotement et l'augmentation linéaire est comprise entre 0,005 mm/° et 0,5 mm/°, de préférence entre 0,02 mm/° et 0,2 mm/° et en particulier entre 0,03 mm/° et 0,08 mm/°.

6. Pompe à piston selon l'une des revendications précédentes
**caractérisée en ce que**
la surface d'appui du guide linéaire (12) pour recevoir le coulisseau (3) et la surface de coulissement du coulisseau (11) s'ajustant dans la direction opposée à celle-ci ont en section transversale un cône aligné avec l'axe central (13).

7. Pompe à piston selon l'une des revendications précédentes
**caractérisée en ce que**
la surface d'appui du guidage linéaire (12) pour recevoir le coulisseau (3) et la surface de coulissement du coulisseau (11) s'ajustant dans la direction opposée à celle-ci sont de préférence de section transversale en forme de V avec un angle de préférence entre 30° et 170° entre 80° et 130°.

8. Pompe à piston selon l'une des revendications précédentes
**caractérisée en ce que**
un agencement du rouleau de balayage (7), du disque à came (1) et du coulisseau (3) est présent de telle sorte que, pour la zone d'un mouvement de pivotement pendant que le rouleau de balayage (7) agit sur le disque à came (1) dans la section en spirale (19, 21), une force radiale A agit du rouleau de balayage (7) sur le disque à came (1), qui forme un angle tel avec la force axiale B, qui entraîne le déplacement du coulisseau (3), qu'une force transversale C pousse le coulisseau (3) verticalement vers le bas dans la surface d'appui du guidage linéaire (12), dans la zone de la surface de glissement (11).

9. Pompe à piston selon l'une des revendications précédentes
**caractérisée en ce que**
l'axe de rotation du disque à came (17) se trouve dans le plan de l'axe central (13) du coulisseau (3) et l'axe de rotation du rouleau de balayage (15) est décalé verticalement vers le haut d'une distance D₁ de l'axe central (13) du coulisseau (3).

10. Pompe à piston selon l'une des revendications précédentes
**caractérisée en ce que**
l'axe de rotation du disque à came (17) est décalé verticalement vers le haut d'une distance D₂ par rapport à l'axe central (13) du coulisseau (3) et l'axe de rotation du rouleau de balayage (15) est décalé verticalement vers le haut d'une distance D₃ par rapport à l'axe de rotation du disque à came (17).

11. Pompe à piston selon l'une des revendications précédentes
**caractérisée en ce que**
le moteur est positionné parallèlement à l'axe de rotation du disque à came (17) derrière et décalé vers le haut ou vers le bas par rapport au pignon à came.

12. Une transmission à came pour transformer un mouvement de pivotement d'un arbre côté entraînement (27) en un mouvement de sortie linéaire, comprenant
a) un disque à came (1) pouvant être fixé à l'arbre côté entraînement (27)
b) un coulisseau (3) qui peut être déplacé au moins par sections le long d'un axe central dans un guide linéaire (5), et
c) un rouleau de balayage (7) qui agit sur la surface circonférentielle du disque à came (1) de telle sorte qu'un mouvement de pivotement du disque à came (1) entraîne un mouvement de sortie linéaire du coulisseau (3) dans le guidage linéaire (5), où
la circonférence du disque à came (1) est conçue pour être en spirale au moins par sections, et le rayon du disque à came (1) dans la section en spirale (19, 21) augmente de façon monotone d'un rayon initial R₁ à un rayon final R₂ dans une direction pivotante,
**caractérisée en ce que**
la surface d'appui du guide linéaire (12) pour recevoir le coulisseau (3) et la surface de coulissement du coulisseau (11) s'ajustant dans la direction opposée à celle-ci ont en section transversale un cône aligné avec l'axe central (13).

13. Une transmission à cames selon l'exigence précédente
**caractérisée en ce que**
la surface d'appui du guidage linéaire (12) pour recevoir le coulisseau (3) et la surface de coulissement du coulisseau (11) s'ajustant dans la direction opposée à celle-ci sont de préférence de section transversale en forme de V avec un angle de préférence entre 30° et 170° entre 80° et 130°.

14. Une utilisation d'une transmission à came pour transformer un mouvement de pivotement d'un arbre côté entraînement (27) en un mouvement de sortie linéaire, comprenant
a) un disque à came (1) pouvant être fixé à l'arbre côté entraînement (27)
b) un coulisseau (3) qui peut être déplacé au moins par sections dans un guidage linéaire (5), et
c) un rouleau de balayage (7) qui agit sur la surface circonférentielle du disque à came (1) de telle sorte qu'un mouvement de pivotement du disque à came (1) entraîne un mouvement de sortie linéaire du coulisseau (3) dans le guidage linéaire (5), où
la circonférence du disque à came (1) est formée au moins par sections en forme de spirale et le rayon du disque à came (1) dans la section en spirale (19, 21) augmente de façon monotone d'un rayon initial R₁ à un rayon final R₂ dans une direction pivotante pour entraîner une pompe à piston
**caractérisée en ce que**
un mouvement de pivotement du disque à came (1) est effectué entre deux points d'inversion lors d'un chargement du rouleau de balayage (7) sur le disque à came (1) dans la section en spirale (19, 21) entre deux points d'inversion de sorte que le piston est déplacé linéairement entre deux points morts, où par détermination des points d'inversion une course prédéterminée du piston est réglée qui correspond à la différence du rayon du disque à came (1) sur le premier point d'inversion et le rayon du disque à came (1) au second point d'inversion.
